# EUROPÄISCHE PATENTSCHRIFT

(11) **EP 3 109 365 B1**
(45) Veröffentlichungstag und Bekanntmachung des Hinweises auf die Patenterteilung: **22.06.2022**
(21) Anmeldenummer: 16171351.6
(22) Anmeldetag: 25.05.2016
(51) Int. Cl.: E02D 7/18, E02D 11/00

(54) **VERFAHREN ZUM STEUERN EINER VIBRATIONSRAMME**
METHOD FOR CONTROLLING A VIBRATION RAMMER
PROCEDE DE COMMANDE D'UN MARTEAU A VIBRATION

(30) Priorität: 22.06.2015 DE 102015008015
(43) Veröffentlichungstag der Anmeldung: 28.12.2016
(73) Patentinhaber: Liebherr-Werk Nenzing GmbH, 6710 Nenzing (AT)
(72) Erfinder: Jussel, Patrick, 6700 Bludenz (AT); Kaufmann, Gerhard, 6710 Nenzing (AT); Schwarzhans, Andreas, 6780 Schruns (AT)
(74) Vertreter: Laufhütte, Dieter

(56) Entgegenhaltungen:
- DE-A1- 19 631 992
- DE-A1-102011 103 401

## Beschreibung

Die vorliegende Erfindung betrifft ein Verfahren zum Steuern einer Vibrationsramme.

Vibrationsrammen sind Maschinen zum Einvibrieren oder Ziehen von Spundbohlen, Rohren, Beton und Holzpfählen oder Trägern (=Rammgut). Dabei wird das Rammgut durch vertikale Vibrationen in Schwingungen versetzt. Diese Vibrationen, die auf das Rammgut übertragen werden, verdrängen den anstehenden Boden, wodurch eine Verringerung des Widerstands zwischen Boden und Rammgut entsteht. In Folge dessen wird das Rammgut mit Hilfe des eigenen und des Gewichts der Vibrationsramme in den Boden getrieben.

In herkömmlichen Rüttelverfahren, so wie in dem Dokument US 634 55 46 B1 gelehrt, kann der Bediener einer Vibrationsramme die verschiedenen Rüttelparameter manuell einstellen, wobei physikalische und technische Grenzen einzuhalten sind. So können beispielsweise Rüttelfrequenzen von kleiner als 20 Hz bei umliegenden Gebäuden zu massiven Schäden führen. Bei Frequenzen von circa 20 Hz kann durch die Eigenfrequenz der Maschine diese beschädigt werden. Frequenzen von größer als 50 Hz können bei entsprechenden Amplituden ebenfalls zerstörerische Wirkung entfalten.

Die DE 196 31 992 A1 offenbart einen Vibrationsbär mit einer Steuervorrichtung, bei dem die Rüttelamplitude frequenzabhängig eingestellt werden kann. Dadurch soll die Vortriebsgeschwindigkeit (=Eintreibgeschwindigkeit des Rammguts in den Boden) angehoben werden können.

Ziel der vorliegenden Erfindung ist es die Vortriebsgeschwindigkeit des in einen Boden einzutreibenden Rammguts weiter zu erhöhen und/oder den Energieverbrauch in Bezug auf den Vortrieb zu minimieren.

Das vorstehend aufgeführte Problem wird durch das Verfahren zum Steuern einer Vibrationsramme, das die Merkmale des Anspruchs 1 umfasst, gelöst.

Anspruch 1 offenbart ein Verfahren zum Steuern einer Vibrationsramme beim Eintreiben eines Rammguts in einen Boden, wobei die Vibrationsramme mit dieser in Verbindung stehende Vibrationseinheit aufweist und an einer Trägermaschine befestigt ist, und in dem Verfahren mindestens ein erster Zustandsparameter der Trägermaschine erfasst wird, und mindestens ein zweiter Zustandsparameter der Vibrationseinheit erfasst wird. Das Verfahren ist ferner dadurch gekennzeichnet, dass anhand des mindestens eines ersten Zustandsparameters und des mindestens einen zweiten Zustandsparameters ein statistisches Bodenmodell in Form eines Bodentiefenprofils, das entlang der Eintreibrichtung des Rammguts verschiedene Eigenschaften des Bodens wiedergibt, erzeugt wird, und einzelne Betriebsparameter der Trägermaschine und der Vibrationseinheit an das statistische Bodenmodell angepasst werden, um den Energieverbrauch und/oder eine Vortriebsgeschwindigkeit beim Eintreiben des Rammguts zu optimieren.

Die Trägermaschine ist dabei eine Arbeitsmaschine, die typischerweise mit Hilfe eines Mäklers mit einer Vibrationseinheit verbunden ist. Dabei kann der Mäkler die Vibrationseinheit entlang einer Achse in Richtung des Bodens, in den das Rammgut eingetrieben oder aus dem das Rammgut gezogen werden soll, verfahren. Das Rammgut wird an der dem Boden zugewandten Seite der Vibrationseinheit mit Hilfe einer Klemmzange befestigt. Durch diese Befestigung werden die von der Vibrationseinheit ausgehenden Vibrationen auf das Rammgut übertragen. Dennoch ist die Führung der Vibrationseinheit mit Hilfe eines Mäklers nicht zwangsläufig vonnöten. Es ist nämlich auch möglich, die Vibrationseinheit frei an einem Kran oder dergleichen auf und ab zubewegen. Im Gegensatz zum mäklergeführten Einvibrieren wird also das freireitende Einvibrieren ohne Führung eines Mäklers ausgeführt.

Die Vibrationseinheit ist dazu ausgelegt, eine Vibration auszuführen, um das Rammgut in den Boden einzuvibrieren. Das Prinzip des Einvibrierens besteht darin, die Reibung und den Spitzenwiderstand zwischen dem Rammgut und dem mit dem Rammgut in Verbindung stehenden Boden zu verringern. Die auch als Vibrationsbär bezeichnete Vibrationseinheit erzeugt Schwingungen, die in das Rammgut übertragen werden. Das schwingende Rammgut löst Schwingungen im umgebenden Erdreich in unmittelbarer Nähe aus. Der umgebende Boden wird vorübergehend in einen pseudoflüssigen Zustand versetzt. Dadurch wird die Reibung zwischen Rammgut und Boden stark reduziert, so dass das Rammgut in den Boden einvibriert werden kann.

Während des Eintreibens eines Rammguts in den Boden wird ein erster Zustandsparameter der Trägermaschine erfasst. Zudem wird ein zweiter Zustandsparameter der Vibrationseinheit erfasst. Auf Grundlage der erfassten Zustandsparameter wird ein statistisches Bodenmodell erzeugt bzw. auf ein statistisches Bodenmodell geschlossen. Durch Anpassen der Betriebsparameter der Trägermaschine und der Vibrationseinheit an das erzeugte statistische Bodenmodell ist es möglich, den Energieverbrauch und/oder eine Vortriebsgeschwindigkeit beim Eintreiben des Rammguts zu optimieren.

Durch die Erzeugung des statistischen Bodenmodells können die Betriebsparameter der Trägermaschine und die Betriebsparameter der Vibrationseinheit auf das erzeugte statistische Bodenmodell angepasst werden. Dadurch wird sichergestellt, dass auch bei einer Änderung des statistischen Bodenmodells, beispielsweise bei einer Veränderung der Bodenzusammensetzung, jeweils die optimalen Betriebsparameter an die Trägermaschine und die Vibrationseinheit gegeben werden. Im Gegensatz zum Stand der Technik wird also nicht auf die Eingaben eines Bedieners der Vibrationsramme blind vertraut, sondern es erfolgt eine Änderung der Betriebsparameter im Hinblick auf die Erzeugung des statistischen Bodenmodells. Dadurch werden ein noch schnelleres Eintreiben des Rammguts und/oder ein geringerer Energieverbrauch beim Eintreiben des Rammguts erreicht.

Erfindungsgemäß ist der mindestens eine erste Zustandsparameter der Trägermaschine eine Vortriebskraft des Rammguts, eine Vortriebsgeschwindigkeit des Rammguts, eine Eindringtiefe des Rammguts, eine Motorleistung der Trägermaschine und/oder ein Energieverbrauch der Trägermaschine.

Als Vortriebskraft des Rammguts wird die Kraft angesehen, mit der das Rammgut in den Boden vorgetrieben wird.

Der mindestens eine zweite Zustandsparameter der Vibrationseinheit umfasst zwingend eine Frequenz der durch die Vibrationseinheit auf das Rammgut übertragenen Schwingung, eine Amplitude der durch die Vibrationseinheit auf das Rammgut übertragenen Schwingung und/oder eine Beschleunigung der Vibrationseinheit.

Als Betriebsparameter der Trägermaschine und der Vibrationseinheit kommen vorzugsweise eine Vortriebskraft des Rammguts, eine Vortriebsgeschwindigkeit des Rammguts, eine Frequenz der Rammgutschwingung und/oder eine Amplitude der Rammgutschwingung (Frequenz und Amplitude jeweils bezogen auf die Vibrationseinheit) in Frage.

Vorzugsweise wird das statistische Bodenmodell durch einen Abgleich des mindestens einen ersten und des mindestens einen zweiten Zustandsparametern mit den Betriebsparametern der Trägermaschine und der Vibrationseinheit erzeugt. Dabei kann eine Diskrepanz oder eine Zusammenhang zwischen den zu erwartenden Zustandsparametern bei der Vorgabe von bekannten Betriebsparametern zur Erzeugung des statistischen Bodenmodells herangezogen werden.

Nach einer weiteren bevorzugten Modifikation der Erfindung weist das statistische Bodenmodell ein Tiefenprofil in Eintreibrichtung des Rammguts auf, um ein adaptives Anpassen der Betriebsparameter der Trägermaschine und der Vibrationseinheit in Abhängigkeit von der Eindringtiefe des Rammguts zu ermöglichen. Dadurch ist es möglich, dass in Abhängigkeit von der Eindringtiefe des Rammguts die Betriebsparameter derart verändert werden, um jeweils optimale Ergebnisse hinsichtlich des erzeugten statistischen Bodenmodells zu erlangen. Beispielsweise wird beim Übergang von einer härteren in eine weichere Bodenschicht die Frequenz der Schwingung, die Amplitude der Schwingung und/oder die Vortriebskraft angepasst.

Nach einer vorteilhaften Weiterbildung der Erfindung wird ein einmal erzeugtes statistisches Bodenmodell abgespeichert und zur Erzeugung eines weiteren statistischen Bodenmodells beim Eintreiben eines weiteren Rammguts herangezogen.

In vielen Rüttelanwendungen wird nicht nur ein einzelnes Rammgut eingetrieben, sondern eine Vielzahl von Rammgütern nebeneinander oder zumindest in örtlicher Nähe zueinander. Dabei ist es theoretisch denkbar, dass sich nun von Rammgut zu Rammgut das Bodenmodell verändert, aber in den meisten Fällen kann von einer begrenzten Kontinuität der Bodenschichten ausgegangen werden. Um beim Eintreiben mehrerer Rammgüter, die in einer gewissen räumlichen Nähe zueinander angeordnet werden, die Anpassung der Betriebsparameter schneller zu erreichen und dadurch den Vortrieb bezüglich Geschwindigkeit und/oder Energieverbrauch weiter zu optimieren, kann die gewonnene Information aus vorangegangenen Rammprozessen, also die vormals erzeugten statistischen Bodenmodelle, verwendet werden. Auf Grundlage dieser bereits vorhandenen Informationen bzw. der bereits gewonnenen und abgespeicherten statistischen Bodenmodelle ist eine zuverlässige Prädiktion des aktuellen Bodenmodells möglich. Dadurch lassen sich die Unsicherheiten bei der Erzeugung des aktuellen statistischen Bodenmodells reduzieren und die Anpassung der Betriebsparameter schneller und optimaler auf zuverlässige Art und Weise realisieren. Insgesamt führt dies zu einem noch schnelleren und energieeffizienteren Rammvorgang.

Vorzugsweise ist der Einfluss des abgespeicherten Bodenmodells auf das weitere zu erzeugende statistische Bodenmodell umso geringer, je größer der räumliche Abstand zwischen dem Ort des abgespeicherten Bodenmodells und des zu erzeugenden weiteren Bodenmodells ist.

Zudem ist denkbar, dass der Einfluss des abgespeicherten Bodenmodells umso geringer auf das weitere zu erzeugende statistische Bodenmodell ist, je älter das abgespeicherte Bodenmodell im Vergleich zu der Gesamtheit aller abgespeicherten Bodenmodelle ist.

Zudem können bei einer weiteren vorteilhaften Modifikation der Erfindung bei der Erzeugung eines ersten einer Vielzahl von Bodenmodellen Rahmenparameter für die Betriebsparameter der Trägermaschine und der Vibrationseinheit von einem Bediener eingegeben werden, um umgebungsbedingte Auflagen nicht zu verletzen.

So kann der Bediener der Vibrationsramme manuell Grenzen für kritische Antriebsparameter festlegen, um beispielsweise eine kritische Grenzfrequenz, die nicht überschritten werden darf, und eine maximale Grenzfrequenz, die nicht überschritten werden darf, nicht zu überschreiten. Darüber hinaus sind abhängig von der Bauart der Trägermaschine technische und/oder räumliche Grenzen gegeben, die den Raum für die Antriebsparameter in allen Dimensionen einschränken.

Insbesondere wird bei der manuellen Eingabe von Rahmenparametern darauf geachtet, dass umgebungsbedingte Auflagen nicht verletzt werden. Hierzu gehört, dass in der Nähe von Gebäuden gewisse Frequenzbereiche von Vibrationen zu meiden sind, dass diese sonst Schaden nehmen können.

Vorzugsweise können die Rahmenparameter eine untere Grenzfrequenz, eine obere Grenzfrequenz, eine maximal Amplitude und/oder eine minimal Amplitude der Schwingung der Vibrationseinheit umfassen.

Nach einem weiteren optionalen Merkmal der Erfindung wird das statistische Bodenmodell mit Hilfe einer Datenbank erstellt, die anhand eines Werts des mindestens einem ersten Zustandsparameters und des mindestens einen zweiten Zustandsparameters einen Rückschluss auf einen bestimmten Bodentyp zulässt. Dabei ist denkbar, dass die Datenbank bereits im Vorfeld des Eitreibens des Rammguts experimentell erstellt worden ist, und während dem Vibrationsvorgang der Vibrationsramme zur Verfügung steht. Dadurch ist es möglich aufgrund des Erfassens des erstem und des zweiten Zustandsparameters ein statistisches Bodenmodell zu erzeugen, das auf keine weiteren Grundlagen wie bereits abgespeicherte statistische Bodenmodelle in örtlicher Nähe zurückgreifen kann.

Auch ist möglich, dass zusätzlich die der Trägermaschine und der Vibrationseinheit zugeführten Betriebsparameter zur Erzeugung des statistischen Bodenmodells herangezogen werden.

Ein weiterer vorteilhafter Aspekt der Erfindung ist, dass ein abgespeichertes Bodenmodell, das beim Eintreiben eines Rammguts erzeugt worden ist, ausgewertet wird, um einen Rückschluss auf die Standfestigkeit des eingetriebenen Rammguts zu ermöglichen und/oder einen Rückschluss auf die Bodenschichten zu ermöglichen. Herkömmlicherweise wären für solche Rückschlüsse spezielle Probebohrungen notwendig, die aufgrund der Erfindung nun entfallen können. Insbesondere der Rückschluss auf die Standfestigkeit des eingetriebenen Rammguts stellt eine wirkungsvolle Möglichkeit dar, etwaige Unregelmäßigkeiten in der Verankerung des Rammguts frühzeitig zu erkennen, sodass größere Schäden rechtzeitig abgewendet werden können.

In jedem Fall ist das Bodenmodell ein Bodentiefenprofil, das entlang der Eintreibrichtung des Rammguts verschiedene Eigenschaften des Bodens wiedergibt.

Die Erfindung wird nachfolgend anhand der Figuren und eines Ausführungsbeispiels detailliert beschrieben. Es zeigen:
- Fig. 1:: die Skizze eines Rüttlers während dem Eintreiben eines Rammguts, und
- Fig. 2:: ein Ablaufdiagramm des erfindungsgemäßen Verfahrens.

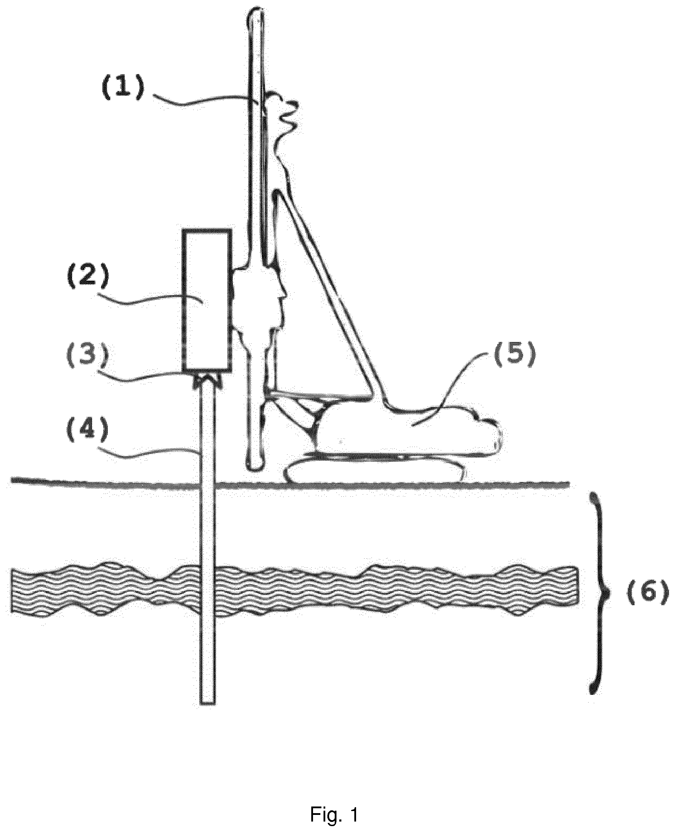

Fig. 1 zeigt eine Arbeitsmaschine 5, ausgestattet mit einem Mäkler 1, längs welchem eine Vibrationseinheit 2 oder ein Rüttler verfahrbar angeordnet ist. Die Vibrationseinheit 2 weist eine Klemmzange 3 auf mit der ein Rammgut 4 (z.B. eine Spundwand, Bohle, Säule, etc.) in einen Boden eingetrieben wird.

Über den Mäkler 1 wird die Vibrationseinheit 2 mit der Vorschubkraft Fᵥ mit der Vortriebsgeschwindigkeit vᵥ gesenkt, um das Rammgut 4 in den Boden zu drücken. Um den Bodenwiderstand zu minimieren versetzt die Vibrationseinheit 2 das Rammgut 4 entlang der Eintriebsachse mit einer Frequenz fᵥ und einer Amplitude Aᵥ in Schwingungen. Die Vibration wird durch mehrere rotierende Unwuchten erzeugt, wobei die Rotationsfrequenz die Schwingungsfrequenz und die Stellung der Unwuchten zueinander die Amplitude definiert. Die Gesamtheit der einstellbaren Parameter Fᵥ, fᵥ, Aᵥ und vᵥ werden in weitere Folge als Antriebsparameter (auch Betriebsparameter genannt) Pᵥ bezeichnet.

Die Arbeitsmaschine 5 ist ausgestattet mit einer Vielzahl an Sensoren, die etwa die Vortriebsgeschwindigkeit, die Vortriebskraft, die Motorleistung und den Energieverbrauch aufzeichnet. Zusätzlich ist die Vibrationseinheit 2 mit einem Beschleunigungssensor und einem Mikroprozessor ausgestattet, der sowohl Frequenzen als auch Amplituden ausgeben kann.

Durch die Kombination der Antriebsparameter Pᵥ mit den Sensorinformationen der Maschine und des Beschleunigungssensors wird nun im laufenden Betrieb ein vereinfachtes statistisches Modell des Bodens erstellt, bei dem in vereinfachter Form das Bodenprofil aufgezeichnet wird.

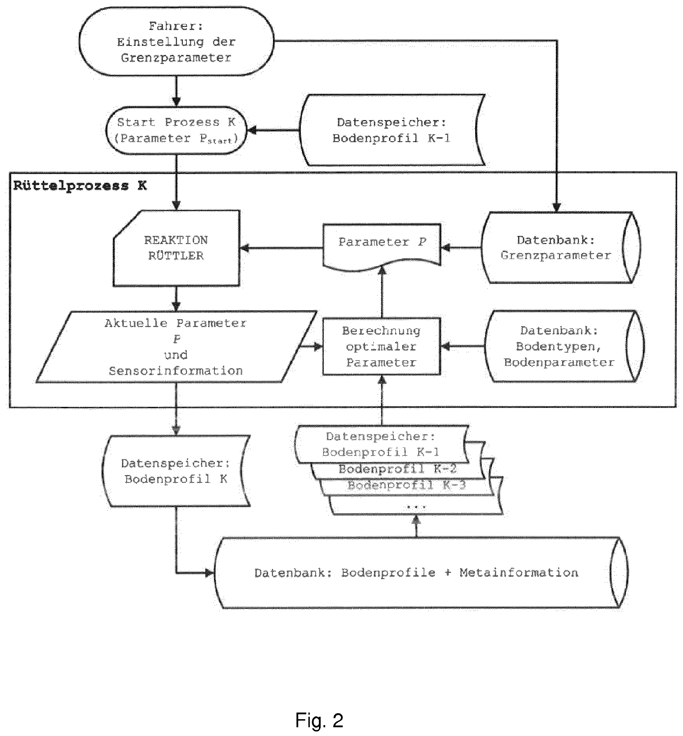

Der entsprechende Prozess ist in Fig. 2 schematisch dargestellt.

In kontrollierten Aufzeichnungen werden durch Varianz der Antriebsparameter beim Eintreiben von Rammgut verschiedenste Böden auf ihr Verhalten untersucht, und durch die gewonnene Sensorinformation ein statistisches Bodenmodell ermittelt (beispielsweise die Dämpfung der Schwingung abhängig von der Tiefe als ein Parameter des Modells). Die Informationen sind in entsprechender Weise lokal in einer Datenbank als Grundinformationen abrufbar. Je nach gegebenen Bedingungen werden optimale Antriebsparameter gewählt, wobei die Wahl der Parameter mittels eines statistischen Algorithmus flexibel auf alle möglichen Bodentypen reagiert (beispielsweise durch Interpolation verschiedener Bodenparameter) .Im laufenden Betrieb können nun die Antriebsparameter abhängig von den jeweiligen Bodenbedingungen derart verstellt werden, dass die Vortriebsgeschwindigkeit und/oder der Energieverbrauch optimiert werden.

Als zusätzliche Bedingung sind natürlich einige Rahmenbedingungen einzuhalten. So kann der Fahrer händisch Grenzen für kritische Antriebsparameter festlegen, wie beispielsweise eine kritische Grenzfrequenz, die nicht unterschritten werden darf, und eine maximale Grenzfrequenz, die nicht überschritten werden darf. Des Weiteren sind abhängig von der Bauart der Trägermaschine 5,1 oder des Rüttlers technische Grenzen gegeben, die den Raum für die Antriebsparameter in allen Dimensionen einschränkt.

Nachfolgend wird ein Ausführungsbeispiel konkret beschrieben.

Dabei wird eine mit einem Rüttler ausgestattete Trägermaschine verwendet, um eine Serie von Spundwänden in einer Reihe einzutreiben. Anfangs stellt der Bediener der Vibrationsramme aufgrund externer Umstände (z.B. Auflagen von Geologen) die erlaubten Rahmenparameter beim Rüttelbetrieb ein. Das erfindungsgemäße Verfahren wird nach Positionieren der ersten Spundwand initialisiert (z.B. die Masse der Spundwände kann als zusätzliche Information in das Verfahren einfließen, wobei die Länge der Spundwand durch die Lage der Vibrationseinheit am Mäkler bestimmt wird).

Der Bediener beginnt mit dem Vibrationsrammen, wobei mit einem Standardsatz an Parametern innerhalb der erlaubten Grenzen gestartet wird. Während dem Prozess des Einvibrierens beginnt die Entwicklung des statistischen Bodenmodells, und die Maschinenparameter werden, sobald eine gewisse Konvergenz vorliegt, auf optimalere Werte eingestellt. Während des Vibrationsprozesses werden weiterhin Daten genommen und ein Tiefenprofil des Bodens erstellt, welches eine adaptive Anpassung der Maschinenparameter erlaubt.

Nach einem erfolgreichen Einvibrieren oder Einrütteln der ersten Spundwand wird die nächste Spundwand neben der ersten positioniert und eingestellt. Der jetzige Rüttelprozess nutzt die in Verbindung mit der ersten Spundwand gewonnen Informationen und beginnt das Einvibrieren mit dem entsprechenden, optimalen Maschinenparametern. Nun werden wieder laufend Daten genommen, ein neues Modell erstellt und mit den bisherigen Daten statistisch aufbereitet. Um sicherzustellen, dass bei stark veränderlichen Böden die statistische Aufbereitung keine falschen Schlüsse zulässt wird sichergestellt, dass zeitlich weiter zurückliegende Informationen oder Informationen die räumlich weiter entfernt gewonnen wurden an Gewicht verlieren.

## Patentansprüche

1. Verfahren zum Steuern einer Vibrationsramme beim Eintreiben eines Rammguts (4) in einen Boden (6), wobei die Vibrationsramme eine mit dieser in Verbindung stehende Vibrationseinheit (2) aufweist und an einer Trägermaschine (5, 1) befestigt ist, und das Verfahren die Schritte umfasst:
Erfassen von mindestens einem ersten Zustandsparameter der Trägermaschine (5, 1), und
Erfassen von mindestens einem zweiten Zustandsparameter der Vibrationseinheit (2), wobei
der mindestens eine erste Zustandsparameter der Trägermaschine (5, 1) eine Vortriebskraft des Rammguts (4), eine Vortriebsgeschwindigkeit des Rammguts (4), eine Eindringtiefe des Rammguts (4), eine Motorleistung der Trägermaschine (5, 1) und/oder ein Energieverbrauch der Trägermaschine (5, 1) ist, und
der mindestens eine zweite Zustandsparameter der Vibrationseinheit (2) eine Frequenz der durch die Vibrationseinheit (2) auf das Rammgut (4) übertragenen Schwingung, eine Amplitude der durch die Vibrationseinheit (2) auf das Rammgut (4) übertragenen Schwingung und/oder eine Beschleunigung der Vibrationseinheit (2) ist,
**dadurch gekennzeichnet, dass**
anhand des mindestens einen ersten Zustandsparameters und des mindestens einen zweiten Zustandsparameters ein statistisches Bodenmodell in Form eines Bodentiefenprofils, das entlang der Eintreibrichtung des Rammguts verschiedene Eigenschaften des Bodens wiedergibt, erzeugt wird, und
einzelne Betriebsparameter der Trägermaschine (5, 1) und der Vibrationseinheit (2) an das statistische Bodenmodell angepasst werden, um den Energieverbrauch und/oder eine Vortriebsgeschwindigkeit beim Eintreiben des Rammguts (4) zu optimieren.

2. Verfahren nach dem vorhergehenden Anspruch 1, wobei die Betriebsparameter der Trägermaschine und der Vibrationseinheit (2) Vortriebskraft des Rammguts (4), Vortriebsgeschwindigkeit des Rammguts (4), Frequenz der Rammgutschwingung und/oder Amplitude der Rammgutschwingung sind.

3. Verfahren nach einem der vorhergehenden Ansprüche, wobei das statistische Bodenmodell in Eintreibrichtung des Rammguts (4) ein Tiefenprofil aufweist, um ein adaptives Anpassen der Betriebsparameter der Trägermaschine und der Vibrationseinheit (2) in Abhängigkeit von der Eindringtiefe des Rammguts (4) zu ermöglichen.

4. Verfahren nach einem der vorhergehenden Ansprüche, wobei ein einmal erzeugtes statistisches Bodenmodell abgespeichert wird und zur Erzeugung eines weiteren statistischen Bodenmodells beim Eintreiben eines weiteren Rammguts (4) herangezogen wird.

5. Verfahren nach Anspruch 4, wobei der Einfluss des abgespeicherten Bodenmodells umso geringer auf das weitere statistische Bodenmodell ist, je größer der räumliche Abstand zwischen dem Ort des abgespeicherten Bodenmodells und des zu erzeugenden weiteren Bodenmodells ist.

6. Verfahren nach Anspruch 4 oder 5, wobei der Einfluss des abgespeicherten Bodenmodells umso geringer auf das weitere statistische Bodenmodell ist, je älter das abgespeicherte Bodenmodell im Vergleich zu der Gesamtheit aller abgespeicherten Bodenmodelle ist.

7. Verfahren nach einem der Ansprüche 4 bis 6, wobei zur Erzeugung eines weiteren statistischen Bodenmodells auf eine Vielzahl von abgespeicherten statistischen Bodenmodellen zurückgegriffen wird.

8. Verfahren nach einem der vorhergehenden Ansprüche, wobei bei der Erzeugung eines ersten einer Vielzahl von Bodenmodellen Rahmenparameter für die Betriebsparameter der Trägermaschine (5, 1) und der Vibrationseinheit (2) von einem Bediener eingegeben werden, um umgebungsbedingte Auflagen nicht zu verletzen.

9. Verfahren nach Anspruch 8, wobei die Rahmenparameter eine untere Grenzfrequenz, eine obere Grenzfrequenz, eine Maximalamplitude und/oder eine Minimalamplitude der Schwingung der Vibrationseinheit (2) umfassen.

10. Verfahren nach einem der vorhergehenden Ansprüche, wobei das statistische Bodenmodell mit Hilfe einer Datenbank erstellt wird, die anhand eines Werts des mindestens einen ersten Zustandsparameters und des mindestens einen zweiten Zustandsparameters einen Rückschluss auf einen bestimmten Bodentyp zulässt.

11. Verfahren nach einem der vorhergehenden Ansprüche 4 bis 7, wobei ein abgespeichertes Bodenmodell, das beim Eintreiben eines Rammguts (4) erzeugt worden ist, ausgewertet wird, um einen Rückschluss auf die Standfestigkeit des eingetriebenen Rammguts (4) zu ermöglichen und/oder einen Rückschluss auf die Bodenschichten zu ermöglichen.

## Claims

1. A method for controlling a vibrating pile driver when driving a pile element (4) into a ground (6), wherein the vibrating pile driver includes a vibration unit (2) connected with the same and is attached to a carrier machine (5, 1), the method comprising the following steps:
detecting at least one first status parameter of the carrier machine (5, 1), and
detecting at least one second status parameter of the vibration unit (2), wherein
the at least one first status parameter of the carrier machine (5, 1) is an advance force of the pile element (4), an advance rate of the pile element (4), a penetration depth of the pile element (4), an engine power of the carrier machine (5, 1) and/or an energy consumption of the carrier machine (5, 1), and
the at least one second status parameter of the vibration unit (2) is a frequency of the vibration transmitted to the pile element (4) by the vibration unit (2), an amplitude of the vibration transmitted to the pile element (4) by the vibration unit (2) and/or an acceleration of the vibration unit (2)
**characterized in that**
with reference to the at least one first status parameter and the at least one second status parameter a statistical ground model, which is a ground depth profile is generated, which indicates various properties of the ground along the driving direction of the pile element, and
individual operating parameters of the carrier machine (5, 1) and of the vibration unit (2) are adapted to the statistical ground model, in order to optimize the energy consumption and/or an advance rate when driving in the pile element (4).

2. The method according to the preceding claim 1, wherein the operating parameters of the carrier machine and the vibration unit (2) are the advance force of the pile element (4), the advance rate of the pile element (4), the frequency of the pile element vibration and/or the amplitude of the pile element vibration.

3. The method according to any of the preceding claims, wherein the statistical ground model has a depth profile in driving direction of the pile element (4), in order to provide for an adaptive adaptation of the operating parameters of the carrier machine and the vibration unit (2) in dependence on the penetration depth of the pile element (4).

4. The method according to any of the preceding claims, wherein a statistical ground model once generated is stored and used for generating a further statistical ground model when driving in a further pile element (4).

5. The method according to claim 4, wherein the influence of the stored ground model on the further statistical ground model is the smaller, the greater the spatial distance is between the location of the stored ground model and of the further ground model to be generated.

6. The method according to claim 4 or 5, wherein the influence of the stored ground model on the further statistical ground model is the smaller, the older the stored ground model is as compared to the entirety of all stored ground models.

7. The method according to any of claims 4 to 6, wherein for generating a further statistical ground model a plurality of stored statistical ground models are used.

8. The method according to any of the preceding claims, wherein framework parameters for the operating parameters of the carrier machine (5, 1) and the vibration unit (2) can be entered by an operator during generation of a first one of a plurality of ground models, so as not to violate environmental requirements.

9. The method according to claim 8, wherein the framework parameters can comprise a lower limit frequency, an upper limit frequency, a maximum amplitude and/or a minimum amplitude of the vibration of the vibration unit (2).

10. The method according to any of the preceding claims, wherein the statistical ground model is created by means of a database which with reference to a value of the at least one first status parameter and the at least one second status parameter permits a conclusion as to a particular type of soil.

11. The method according to any of the preceding claims 4 to 7, wherein a stored ground model, which has been generated when driving in a pile element (4), is evaluated, in order to provide for a conclusion as to the stability of the pile element (4) driven in and/or to provide for a conclusion as to the soil layers.

## Revendications

1. Procédé de commande d'un vibrofonceur lors de l'enfoncement d'un élément de fonçage (4) dans un sol (6), le vibrofonceur présentant une unité vibrante (2) reliée à celui-ci et étant fixé à une machine porteuse (5, 1), et le procédé comprenant les étapes suivantes :
la détection d'au moins un premier paramètre d'état de la machine porteuse (5, 1), et
la détection d'au moins un deuxième paramètre d'état de l'unité vibrante (2),
l'au moins un premier paramètre d'état de la machine porteuse (5, 1) étant une force d'avancement de l'élément de fonçage (4), une vitesse d'avancement de l'élément de fonçage (4), une profondeur de pénétration de l'élément de fonçage (4), une puissance de moteur de la machine porteuse (5, 1) et/ou une consommation d'énergie de la machine porteuse (5, 1), et
l'au moins un deuxième paramètre d'état de l'unité vibrante (2) étant une fréquence de la vibration transmise par l'unité vibrante (2) à l'élément de fonçage (4), une amplitude de la vibration transmise par l'unité vibrante (2) à l'élément de fonçage (4) et/ou une accélération de l'unité vibrante (2),
**caractérisé en ce que**
à l'aide de l'au moins un premier paramètre d'état et de l'au moins un deuxième paramètre d'état, un modèle de sol statistique est généré sous la forme d'un profil de profondeur de sol qui représente différentes propriétés du sol le long de la direction d'enfoncement de l'élément de fonçage, et
des paramètres de fonctionnement individuels de la machine porteuse (5, 1) et de l'unité vibrante (2) sont adaptés au modèle de sol statistique afin d'optimiser la consommation d'énergie et/ou une vitesse d'avancement lors de l'enfoncement de l'élément de fonçage (4).

2. Procédé selon la revendication 1 précédente, dans lequel les paramètres de fonctionnement de la machine porteuse et de l'unité vibrante (2) sont la force d'avancement de l'élément de fonçage (4), la vitesse d'avancement de l'élément de fonçage (4), la fréquence de la vibration de l'élément de fonçage et/ou l'amplitude de la vibration de l'élément de fonçage.

3. Procédé selon l'une quelconque des revendications précédentes, dans lequel le modèle de sol statistique présente un profil de profondeur dans la direction d'enfoncement de l'élément de fonçage (4), afin de permettre un ajustement adaptatif des paramètres de fonctionnement de la machine porteuse et de l'unité vibrante (2) en fonction de la profondeur de pénétration de l'élément de fonçage (4).

4. Procédé selon l'une quelconque des revendications précédentes, dans lequel un modèle de sol statistique généré une fois est enregistré et utilisé pour générer un autre modèle de sol statistique lors de l'enfoncement d'un autre élément de fonçage (4).

5. Procédé selon la revendication 4, dans lequel l'influence du modèle de sol enregistré sur l'autre modèle de sol statistique est d'autant plus faible que la distance spatiale entre l'emplacement du modèle de sol enregistré et l'autre modèle de sol à générer est grande.

6. Procédé selon la revendication 4 ou 5, dans lequel l'influence du modèle de sol enregistré sur l'autre modèle de sol statistique est d'autant plus faible que le modèle de sol enregistré est ancien par rapport à l'ensemble de tous les modèles de sol enregistrés.

7. Procédé selon l'une quelconque des revendications 4 à 6, dans lequel une pluralité de modèles de sol statistiques enregistrés sont utilisés pour générer un autre modèle de sol statistique.

8. Procédé selon l'une quelconque des revendications précédentes, dans lequel, lors de la génération d'un premier d'une pluralité de modèles de sol, des paramètres cadres pour les paramètres de fonctionnement de la machine porteuse (5, 1) et de l' unité vibrante (2) sont entrés par un opérateur afin de ne pas violer les contraintes environnementales.

9. Procédé selon la revendication 8, dans lequel les paramètres cadres comprennent une fréquence limite inférieure, une fréquence limite supérieure, une amplitude maximale et/ou une amplitude minimale de la vibration de l'unité vibrante (2).

10. Procédé selon l'une quelconque des revendications précédentes, dans lequel le modèle de sol statistique est créé à l'aide d'une base de données qui permet une conclusion sur un type de sol déterminé à partir d'une valeur de l'au moins un premier paramètre d'état et de l'au moins un deuxième paramètre d'état.

11. Procédé selon l'une quelconque des revendications 4 à 7 précédentes, dans lequel un modèle de sol enregistré, qui a été généré lors de l'enfoncement d'un élément de fonçage (4), est évalué afin de permettre une conclusion sur la stabilité de l'élément de fonçage enfoncé (4) et/ou de permettre une conclusion sur les couches de sol.
